# EUROPÄISCHE PATENTSCHRIFT

(11) **EP 2 036 705 B1**
(45) Veröffentlichungstag und Bekanntmachung des Hinweises auf die Patenterteilung: **29.06.2011**
(21) Anmeldenummer: 08161048.7
(22) Anmeldetag: 24.07.2008
(51) Int. Cl.: B29D 30/26

(54) **Vorrichtung zum Positionieren eines Reifenkernes auf einer Reifenkarkasse für die Herstellung von Fahrzeugreifen**
Device for positioning a tyre bead onto a tyre carcass for the production of vehicle tyres
Dispositif de positionnement d'un tringle de talon sur une carcasse de pneu pour la fabrication de pneus pour véhicules

(30) Priorität: 15.09.2007 DE 102007043696
(43) Veröffentlichungstag der Anmeldung: 18.03.2009
(73) Patentinhaber: Continental Reifen Deutschland GmbH, 30165 Hannover (DE)
(72) Erfinder: Böhm, Mario, 30559 Hannover (DE); Linne, Stefan, 30900 Wedemark (DE); Preiß, Uwe, 30827 Garbsen (DE); Pawlik, Karl-Heinz, 30455 Hannover (DE)
(74) Vertreter: Finger, Karsten

(56) Entgegenhaltungen:
- EP-A- 1 264 681
- WO-A-03/061954
- JP-A- 57 032 935
- US-A- 3 212 951
- US-A- 3 845 979
- US-A- 4 430 143
- US-A- 4 634 489

## Beschreibung

Die Erfindung betrifft eine Vorrichtung zum Positionieren eines Reifenkernes auf einer Reifenkarkasse für die Herstellung von Fahrzeugreifen.

Bei der Herstellung von Fahrzeugreifen werden unterschiedliche Reifenaufbauteile auf einer Karkasstrommel aufgewickelt und weiter verarbeitet. Ein spezieller Verfahrensschritt besteht darin, die Reifenkerne an den entsprechenden Stellen auf der Reifenkarkasse zu positionieren. Dieser Schritt kann durch eine sogenannte Kemsetz- und Karkasstransportvorrichtung erfolgen, bei der der Reifenkern über radial angeordnete Segmente gehalten wird. Die Kemsetzvorrichtung fährt über die Karkasstrommel und anschließend expandiert die Karkasstrommel, so dass die Reifenkerne mit der Reifenkarkasse an den entsprechenden Stellen verbunden werden. Anschließend wird die Reifenkarkasse an einen Bombierkopf übergeben.

Die Druckschriften WO03061954-A, US3212951-A, US4634489-A, US4430143-A, EP1264681-A, JP57032935-A, US3845979-A offenbaren Vorrichtungen zum Herstellen von Fahrzeugreifen wie sie aus dem Stand der Technik bekannt sind.

Ein Nachteil bei herkömmlichen Kemsetz- und Karkasstransportvorrichtungen besteht darin, dass diese nicht flexibel für verschiedene Zollgrößen von Reifen eingesetzt werden können. Soll beispielsweise die Herstellung einer anderen Reifengröße vorgenommen werden, so muss die gesamte Vorrichtung, die dann an die entsprechende Reifengröße angepasst ist, ausgewechselt werden. Dieses erhöht die Rüstzeiten und verringert die Produktionsstückzahlen.

Der Erfindung liegt die Aufgabe zugrunde, eine Vorrichtung zu schaffen, mit der mit einer hohen Flexibilität Reifenkerne mit unterschiedlichen Durchmessern auf einer Reifenkarkasse positioniert werden können.

Gelöst wird die Aufgabe gemäß dem Oberbegriff und den kennzeichnenden Merkmalen des Anspruchs 1. Vorteilhafte Ausgestaltungen der Erfindung sind Gegenstand der Ünteransprüche 2 bis 7.

Ein Vorteil der Erfindung ist insbesondere darin zu sehen, dass sich die erfindungsgemäße Vorrichtung durch eine hohe Flexibilität auszeichnet. Die erfindungsgemäße Vorrichtung kann nunmehr Reifenkerne mit unterschiedlichen Durchmessern aufnehmen, weil der durch die Segmente gebildete Durchmesser variabel über das Zahnradgetriebe einstellbar ist. Entsprechend der Reifengröße bzw. dem Durchmesser des Reifenkerns werden die einzelnen Segmente synchron zueinander verfahren, um dann den entsprechenden Reifenkern einsetzen und fixieren zu können.

Bei der erfindungsgemäßen Vorrichtung ist vorgesehen, dass das Zahnradgetriebe an den Segmenten angeordnete Zahnstangen umfasst, die jeweils mit einem Zahnrad in Eingriff stehen. Die Zahnstangen ermöglichen eine relativ lange Hubtiefe, wodurch sowohl Reifenkerne mit einem kleinen als auch mit einem großen Durchmesser durch die Segmente aufgenommen werden können.

Bei der erfindungsgemäßen Vorrichtung ist zußerdem vorgesehen, dass das Zahnradgetriebe mindestens einen drehbar gelagerten Zahnkranz umfasst, welches mit den Zahnrädern in Eingriff steht und die synchrone Bewegung der Segmente umsetzt. Mit dem Zahnkranz lässt sich auf einfache Weise die synchrone Bewegung der Segmente realisieren.

In einer weiteren vorteilhaften Weiterbildung der Erfindung ist vorgesehen, dass eines der Zahnräder von einem Servomotor angetrieben wird. Der Servomotor lässt sich auf einfache Weise mit einem der Zahnräder koppeln.

In einer weiteren vorteilhaften Weiterbildung der Erfindung ist vorgesehen, dass an einigen Segmenten klappbare Zentrierplatten zur Aufnahme und zum Zentrieren der Reifenkerne angeordnet sind. Die Zentrierplatten unterstützen zum einen das Einlegen der Reifenkerne in die Vorrichtung und zum anderen das Zentrieren der Reifenkerne in der Vorrichtung.

In einer weiteren vorteilhaften Weiterbildung der Erfindung ist vorgesehen, dass die Segemente jeweils ein Kernhaltesegment und ein Kernklemmsegment umfassen, wobei der Reifenkern bei der Positionierung zwischen diesen Segmentteilen gehalten wird. Dadurch kann der Reifenkern fest zwischen den beiden Segmenten eingeklemmt werden.

In einer weiteren vorteilhaften Weiterbildung der Erfindung ist vorgesehen, dass das Kernklemmsegment mit einem pneumatischen Zylinder in Verbindung steht, der das Kernklemmsegment gegen den Reifenkern verfährt und dabei den Reifenkern mit dem Kernhaltesegment verklemmt. Mit dem pneumatischen Zylinder kann der Reifenkern fest zwischen dem Kernklemmsegment und dem Kernhaltesegment eingeklemmt werden.

In einer weiteren vorteilhaften Weiterbildung der Erfindung ist vorgesehen, dass die Vorrichtung zwei parallel nebeneinander angeordnete Einheiten umfasst, die jeweils einen linken und einen rechten Reifenkern aufnehmen sowie auf einer Reifenkarkasse positionieren. Dadurch werden beide Reifenkerne gleichzeitig auf der Reifenkarkasse positioniert.

In einer weiteren vorteilhaften Weiterbildung der Erfindung ist vorgesehen, dass die Vorrichtung nach dem Positionieren der Reifenkerne auf der Reifenkarkasse, die Reifenkarkasse aufnimmt und an einen Bombierkopf für die Reifenherstellung übergibt.

Anhand eines Ausführungsbeispiels soll die Erfindung näher erläutert werden. Es zeigen:
Fig. 1: eine Seitenansicht der erfindungsgemäßen Vorrichtung
Fig. 2: eine Schnittansicht A - A, der in der Fig. 1 dargestellten Schnittlinie
Fig. 3: eine Prinzipskizze der Schnittansicht A - A

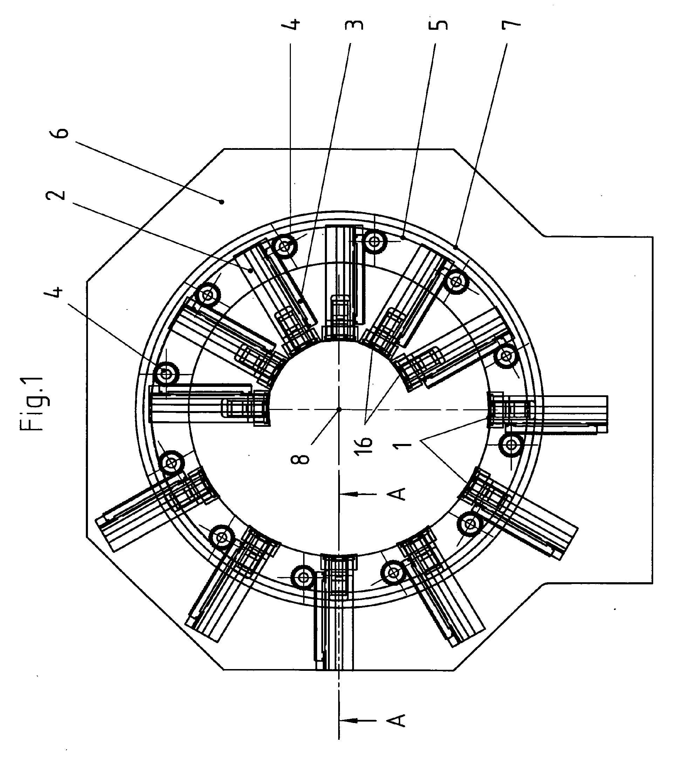

Die Fig. 1 zeigt ein Ausführungsbeispiel der Vorrichtung in einer Seitenansicht. Die Vorrichtung besitzt eine axiale Achse 8, die senkrecht zur Blattebene liegt und um die die Segmente 1 rotationssymmetrisch angeordnet sind. Die Segmente 1 und 16 sind jeweils an einem radial verfahrbaren Schlitten 2 angeordnet.

Am Schlitten 2 ist jeweils eine Zahnstange 3 befestigt, die mit einem Zahnrad 4 im Eingriff steht. Bei einer Drehbewegung des Zahnrades 3 wird der Schlitten 2 mit dem daran angeordneten Segment 1 in radialer Richtung ein- oder ausgefahren. Jedes einzelne Zahnrad 4 steht mit einem äußeren Zahnkranz 5 im Eingriff, welches auf der Innenseite des Rahmens 6 der Vorrichtung angeordnet ist. Der Zahnkranz 5 ist über eine Lagerung 7 drehbar mit dem Rahmen 6 verbunden. Eines der dort dargestellten Zahnräder 4 wird über einen nicht dargestellten Servomotor angetrieben. Das entsprechende Zahnrad 4 treibt den drehbar gelagerten äußeren Zahnkranz 5 an, welcher wiederum alle anderen Zahnräder 4 in eine entsprechende Drehbewegung versetzt. Die Folge ist, dass sich die Schlitten 2 alle synchron in radialer Richtung bewegen. Die Segmente 1 bilden jeweils einen speziellen Durchmesser, der im Wesentlichen dem Durchmesser der aufzunehmenden Reifenkeme entspricht. In der Figur sind einige der Segmente 1 in ihrer äußersten Position dargestellt. In dieser Position können die Segmente 1 Reifenkeme mit einem sehr großen Durchmesser aufnehmen und fixieren, insb. Reifenkeme für 30-Zollreifen. Die Segmente 16 sind soweit eingefahren, dass diese einen relativ kleinen Durchmesser bilden und somit relativ kleine Reifenkeme mit einem kleinen Durchmesser aufnehmen können, insb. Reifenkeme für 18-Zollreifen. Ein wesentlicher Vorteil der Vorrichtung besteht somit darin, dass die Vorrichtung für Reifenkeme mit unterschiedlichen Dimensionen konzipiert ist. In Abhängigkeit von dem Durchmesser der Reifenkeme bzw. der herzustellenden Reifengröße werden die Segmente um einen entsprechenden Hub entweder ein- oder ausgefahren.

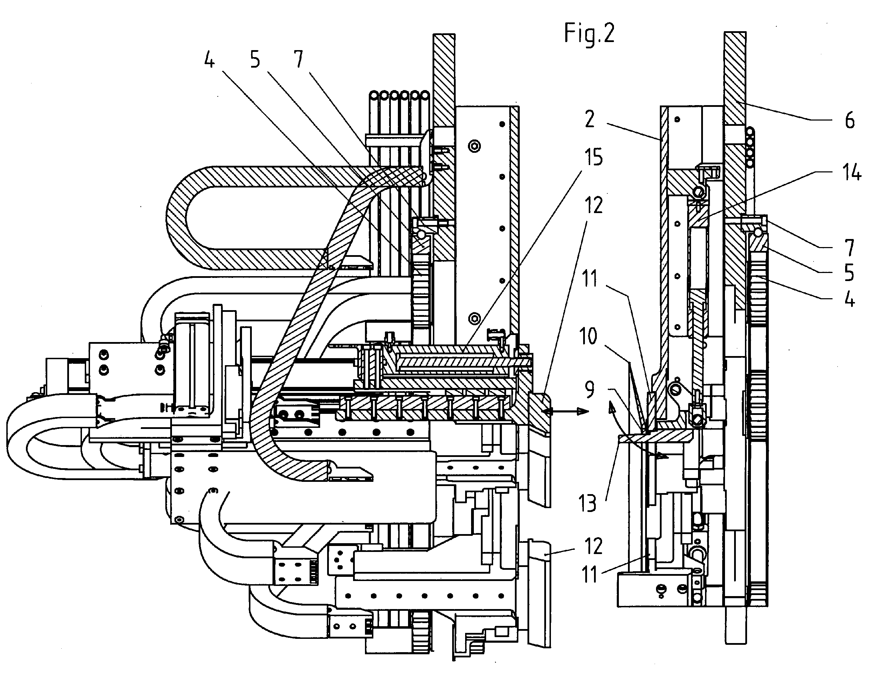

Die Fig. 2 zeigt eine Schnittansicht der Vorrichtung, die sich auf die Schnittlinie A - A in der Fig. 1 bezieht. Der Reifenkem 9 mit dem Kemreiter 10 wird in aufrechter Position in die Vorrichtung eingesetzt und zunächst von einer Zentrierplatte 13 gehalten. Die Zentrierplatte 13 ist schwenkbar mittels dem Schwenkzylinder 14. In einem folgenden Verfahrensschritt wird das Klemmsegment 12 mit dem pneumatischen Zylinder 15 in angedeuteter axialer Richtung gegen den Reifenkem 9 verfahren. Der Reifenkem 9 mit dem Kernreiter 10 wird somit zwischen dem Kernklemmsegment 12 und dem Kemhaltesegment 11 eingeklemmt. Beide Segmente bilden die Segmente 1, die in der Figur 1 dargestellt sind. Das Kernhaltesegment 11 ist mit dem Schlitten 2 verbunden, welches sich in radialer Richtung bewegen kann. Die Zahnräder 4 treiben jeweils den äußeren Zahnkranz 5 an, der wiederum über eine Lagerung 7 mit dem Rahmen 6 in Verbindung steht. Eines der Zahnräder 4 auf der rechten Seite ist mit einem der Zahnräder 4 auf der linken Seite der Vorrichtung gekoppelt, so dass sowohl das Kernklemmsegment 12 als auch das Kemhaltesegment 11 synchron verfahren werden. In der Fig. 2 ist nur die linke Einheit zur Aufnahme des linken Reifenkems 9 dargestellt.

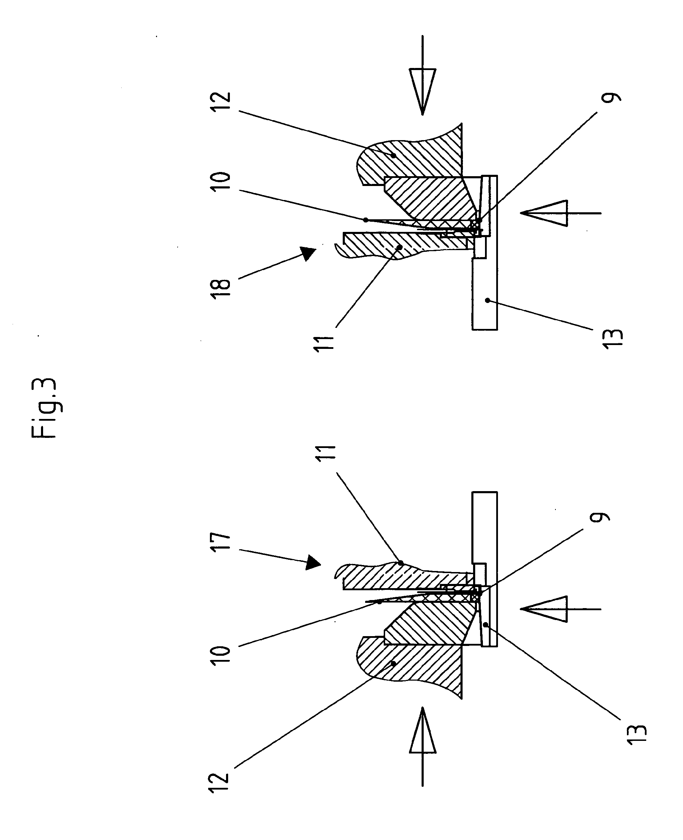

Die Fig. 3 zeigt eine Prinzipsskizzenansicht mit der linken und der rechten Einheit 17 und 18. Die linke Einheit 17, die in Fig. 2 dargestellt ist, ist für die Positionierung des linken Reifenkemes zuständig. Parallel dazu wird der rechte Reifenkem mit der rechten Einheit 18 an der entsprechenden Stelle auf der Reifenkarkasse positioniert. Die Figur zeigt den Zustand, bei dem der Reifenkem 9 jeweils mit dem Kemreiter 10 zwischen dem Kemhaltesegment und dem Kernklemmsegment 12 eingespannt ist. Vor dem Setzen der Reifenkeme auf die Reifenkarkasse werden die Zentrierplatten 13 nach unten weggeklappt.

### Bezugszeichenliste

### (ist Teil der Beschreibung)

- 1: Segmente
- 2: Schlitten
- 3: Zahnstange
- 4: Zahnrad
- 5: äußerer Zahnkranz
- 6: Rahmen
- 7: Lagerung
- 8: axiale Achse
- 9: Reifenkem
- 10: Kemreiter
- 11: Kemhaltesegment
- 12: Kernklemmsegement
- 13: Zenrierplatte
- 14: Schwenkzylinder
- 15: pneumatischer Zylinder
- 16: Segmente
- 17: linke Einheit
- 18: rechte Einheit

## Patentansprüche

1. Vorrichtung zum Positionieren eines Reifenkernes (9) auf einer Reifenkarkasse für die Herstellung von Fahrzeugreifen, wobei die Vorrichtung einen Rahmen (6) und eine Vielzahl von Segmenten (1, 16) zur Aufnahme des Reifenkernes (9) umfasst, wobei die Segmente (1, 16) jeweils an radial verfahrbaren Schlitten sowie im Wesentlichen rotationssymmetrisch um eine axiale Achse (8) der Vorrichtung angeordnet sind,
**dadurch gekennzeichnet, dass**
die Segmente (1, 16) synchron über ein Zahnradgetriebe in radialer Richtung verfahren werden,
wobei das Zahnradgetriebe an den Segmenten angeordnete Zahnstangen (3) umfasst, die jeweils mit einem Zahnrad (4) in Eingriff stehen,
das Zahnradgetriebe mindestens einen drehbar gelagerten Zahnkranz (5) umfasst, welches mit den Zahnrädern (4) in Eingriff steht und die synchrone Bewegung der Segmente (1, 16) umsetzt.

2. Vorrichtung nach Anspruch 1,
**dadurch gekennzeichnet, dass**
eines der Zahnräder (4) von einem Servomotor angetrieben wird.

3. Vorrichtung nach einem der vorhergehenden Ansprüche,
**dadurch gekennzeichnet, dass**
an einigen Segmenten klappbare Zentrierplatten (13) zur Aufnahme und zum Zentrieren der Reifenkerne (9) angeordnet sind.

4. Vorrichtung nach einem der vorhergehenden Ansprüche,
**dadurch gekennzeichnet, dass**
die Segemente (1) jeweils ein Kernhaltesegment (11) und ein Kernklemmsegment (12) umfassen, wobei der Reifenkern (9) bei der Positionierung zwischen diesen Segmentteilen gehalten wird.

5. Vorrichtung nach einem der vorhergehenden Ansprüche,
**dadurch gekennzeichnet, dass**
das Kernklemmsegment (12) mit einem pneumatischen Zylinder (15) in Verbindung steht, der das Kernklemmsegment (12) gegen den Reifenkern (9) verfährt und dabei den Reifenkern (9) mit dem Kernhaltesegment (11) verklemmt.

6. Vorrichtung nach einem der vorhergehenden Ansprüche,
**dadurch gekennzeichnet, dass**
die Vorrichtung zwei parallel nebeneinander angeordnete Einheiten (17, 18) umfasst, die jeweils einen linken und einen rechten Reifenkern aufnehmen sowie auf einer Reifenkarkasse positionieren.

7. Vorrichtung nach einem der vorhergehenden Ansprüche,
**dadurch gekennzeichnet, dass**
die Vorrichtung nach dem Positionieren der Reifenkerne auf der Reifenkarkasse, die Reifenkarkasse aufnimmt und an einen Bombierkopf für die Reifenherstellung übergibt.

## Claims

1. Device for positioning a tyre bead (9) on a tyre carcass for the production of vehicle tyres, wherein the device comprises a frame (6) and a multiplicity of segments (1, 16) for holding the tyre bead (9), wherein the segments (1, 16) are each arranged on radially movable carriages and in an essentially rotationally symmetrical fashion about an axial axis (8) of the device,
**characterized in that**
the segments (1, 16) move synchronously in the radial direction by means of a gearwheel mechanism,
wherein the gearwheel mechanism comprises toothed racks (3) which are arranged on the segments and each engage with a gearwheel (4),
the gearwheel mechanism comprises at least one rotatably mounted gear ring (5) which engages with the gearwheels (4) and converts the synchronous movement of the segments (1, 16).

2. Device according to Claim 1,
**characterized in that**
one of the gearwheels (4) is driven by a servomotor.

3. Device according to one of the preceding claims,
**characterized in that**
centring panels (13) which control a number of segments are arranged for the purpose of holding and centring the tyre beads (9).

4. Device according to one of the preceding claims,
**characterized in that**
the segments (1) each comprise a bead securing segment (11) and a bead clamping segment (12), wherein the tyre bead (9) is held between the segment parts during the positioning process.

5. Device according to one of the preceding claims,
**characterized in that**
the bead clamping segment (12) connects to a pneumatic cylinder (15) which moves the bead clamping segment (12) against the tyre bead (9) and in the process clamps the tyre bead (9) to the bead securing segment (11).

6. Device according to one of the preceding claims,
**characterized in that**
the device comprises two units (17, 18) which are arranged parallel to one another and, each hold a left-hand and a right-hand tyre bead and position the latter on a tyre carcass.

7. Device according to one of the preceding claims,
**characterized in that**
after the positioning of the tyre beads on the tyre carcass, the device holds the tyre carcass and transfers it to a shaping head for the production of tyres.

## Revendications

1. Dispositif de positionnement d'une âme (9) de bandage de roue sur une carcasse de bandage de roue dans la fabrication de bandages de roue de véhicule, le dispositif comportant un bâti (6) et plusieurs segments (1, 16) qui reprennent l'âme (9) du bandage de roue, les segments (1, 16) étant tous disposés sur des chariots déplaçables radialement et disposés essentiellement à symétrie de rotation autour d'un axe axial (8) du dispositif,
**caractérisé en ce que**
les segments (1, 16) sont déplacés de manière synchronisée dans la direction radiale par une transmission à pignons dentés,
**en ce que** la transmission à pignons dentés comporte des crémaillères (3) disposées sur les segments, chacune d'entre elles engageant un pignon denté (4), et
**en ce que** la transmission à pignons dentés comporte au moins une couronne dentée (5) montée à rotation, qui engage les pignons dentés (4) et qui convertit le déplacement synchronisé des segments (1, 16).

2. Dispositif selon la revendication 1, **caractérisé en ce que** l'un des pignons dentés (4) est entraîné par un servomoteur.

3. Dispositif selon l'une des revendications précédentes, **caractérisé en ce que** sur certains segments, des plaques rabattables de centrage (13) sont disposées pour reprendre et centrer les âmes (9) de bandage de roue.

4. Dispositif selon l'une des revendications précédentes, **caractérisé en ce que** les segments (1) comprennent chacun un segment (11) de retenue d'âme et un segment (12) de serrage d'âme, l'âme (9) du bandage de roue étant maintenue entre ces parties de segment lors de son positionnement.

5. Dispositif selon l'une des revendications précédentes, **caractérisé en ce que** le segment (12) de serrage d'âme communique avec un vérin pneumatique (15) qui déplace le segment (12) de serrage d'âme contre l'âme (9) du bandage de roue et bloque ainsi l'âme (9) du bandage de roue sur le segment (11) de retenue d'âme.

6. Dispositif selon l'une des revendications précédentes, **caractérisé en ce que** le dispositif comporte deux unités (17, 18) disposées parallèlement l'une à l'autre, qui reprennent chacune une âme gauche de bandage de roue et une âme droite de bandage de roue et les placent sur une carcasse de bandage de roue.

7. Dispositif selon l'une des revendications précédentes, **caractérisé en ce qu'**après le positionnement des âmes de bandage de roue sur la carcasse de bandage de roue, le dispositif reprend la carcasse de bandage de roue et la transfère à une tête de bombage en vue de la fabrication du bandage de roue.
